(19) Europäisches Patentamt / European Patent Office / Office européen des brevets

(11) **EP 1 801 166 A1**

(12) **EUROPÄISCHE PATENTANMELDUNG**

(43) Veröffentlichungstag:
27.06.2007 Patentblatt 2007/26

(51) Int Cl.:
*C09C 1/30* (2006.01)          *C01B 33/18* (2006.01)
*C08K 3/36* (2006.01)

(21) Anmeldenummer: 05112922.9

(22) Anmeldetag: 23.12.2005

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Degussa GmbH**
**40474 Düsseldorf (DE)**

(72) Erfinder:
• **Meyer, Jürgen, Dr.**
**63811 Stockstadt/Main (DE)**
• **Scholz, Mario, Dr.**
**63584 Gründau (DE)**

(54) **Pyrogen hergestelltes silanisiertes Siliciumdioxid**

(57) Pyrogen hergestelltes silanisiertes Siliciumdioxid mit den physikalisch-chemischen Kenndaten

```
Grindometerwert      kleiner 20 µm
Stampfdichte         25 bis 85 g/l
```

wird hergestellt, indem man pyrogen hergestelltes Siliciumdioxid, welches silanisiert wurde, vermahlt.
Es kann in Siliconkautschuk eingesetzt werden.

EP 1 801 166 A1

**Beschreibung**

Die Erfindung betrifft pyrogen hergestelltes silanisiertes Siliciumdioxid, ein Verfahren zu seiner Herstellung und seiner Verwendung.

Pyrogen hergestelltes Siliciumdioxid (englisch fumed silica) ist bekannt aus Ullmanns Enzyklopädie der technischen Chemie, Band 21, Seite 464 (1982).

Es wird hergestellt, indem man eine verdampfbare Siliciumverbindung, wie zum Beispiel Silicumtetrachlorid, im Gemisch mit Wasserstoff und Sauerstoff verbrennt.

Die Zerkleinerung von Stoffen zu Mehlen (50 - 500 $\mu$m), Pudern (5-50 $\mu$m) und noch größeren Feinheiten (kleiner 5 $\mu$m) ist in der Praxis allgemein üblich. Es werden für alle Zerkleinerungsaufgaben eine Vielzahl von technischen Einrichtungen angeboten und betrieben, die den Besonderheiten der einzelnen Aufgaben angepaßt sind. Eine gute Übersicht über die Zerkleinerungsprobleme und die diversen Maschinen wird in Ullmann's Enzyklopädie der technischen Chemie, 3. Auflage Band 1, Seite 616 bis Seite 638 gegeben.

Bei pyrogen hergestelltem Siliciumdioxid sind die mittleren Primärteilchendurchmesser beachtlich geringer (5-50 nm), als sie durch eine mechanische Zerkleinerung erhalten werden können.

Die Primärteilchen und Aggregate der pyrogenen Kieselsäure mit einer Oberfläche von 200 m2/g können im Elektronenmikroskop sichtbar gemacht werden.

Die Primärteilchen und Aggregate einer pyrogenen Kieselsäure lagern sich zu größeren Verbänden, den Agglomeraten zusammen, die im Regelfall um so größer sind, je geringer die Primärteilchengröße beziehungsweise je größer die spezifische Oberfläche ist. Sowie je stärker das pyrogen hergestellte Siliciumdioxid verdichtet ist.

Die Bindungskräfte, mit denen diese Agglomerate zusammengehalten werden, sind relativ schwach. Dennoch bedarf es bei der Einarbeitung und Auflösung dieser Agglomerate in einem flüssigen System zum Zweck der homogenen Verteilung der Primärteilchen und Aggregate beziehungsweise niedrig agglomerierter Partikel eines gewissen Scheraufwandes. Für die Dispergierung werden je nach Anwendungsgebiet die verschiedensten Mischgeräte eingesetzt, wobei sowohl die Viskosität und Polarität des Systems als auch die Agglomeratfestigkeit und die gewünschte Homogenität für die Auswahl bestimmend sind.

Mit einfachen Rührwerken, zum Beispiel Flügelrührern, ist die direkte Einarbeitung kleiner Mengen Kieselsäuren meist nicht befriedigend durchführbar, besonders dann nicht, wenn es sich um niedrigviskose Systeme handelt. Jedoch sind die Lack- und Farbenhersteller, sowie die Verarbeiter daran interessiert, eine anwendungstechnisch optimale Verteilung der überwiegend als Verdickungs- und Thixotropierungsmittel eingesetzten Kieselsäuren mit einfachsten Geräten und möglichst geringem zeitlichen und energetischen Aufwand zu erzielen.

Im Falle der Flügelrührer-Dispergierung werden die groben Kieselsäureagglomerate nicht genügend zerkleinert und können so nur einen kleinen Beitrag zu Anhebung von Viskositäten und Thixotropie leisten. Die Angaben beziehen sich auf ein UP-Harz (ungesättigtes Polyester-Harz) als Dispersionsmittel.

Eine Verminderung der Agglomeratgröße durch Dispergierung außerhalb eines flüssigen Systems, also praktisch an der Luft oder durch Mahlung im herkömmlichen Sinne ist nur im begrenzten Umfang möglich, denn bei gegebener Agglomerationsneigung des Materials stellt sich im Anschluß an die Zerkleinerung alsbald der alte Agglomerationszustand wieder ein. Dieser Effekt tritt spätestens nach erneuter Verdichtung des durch den mechanischen Eingriff stark aufgelockerten und in dieser Form nicht versand- und lagerfähigen Materials ein. Auch die Lagerzeit würde sich im Sinne erneuten Agglomeratvergrößerung auswirken.

Als Massezahl und Bewertungsgröße für den Verteilungszustand einer dispergierbaren Kieselsäure und maximale Agglomeratgröße der Dispersion (Körnigkeit) gilt der sogenannte Grindometerwert nach DIN 53203.

Es ist bekannt, pyrogen hergestelltes Siliciumdioxid zu hydrophobieren, in einer Stiftmühle zu vermahlen und anschließend zu klassieren (US 2004/0110077 A1).

Dieses bekannte Siliciumdioxid wird als externes Additiv in Tonermischungen eingesetzt.

Hydrophiles, pyrogen hergestelltes Siliciumdioxid mit einer BET-Oberfläche besitzt einen in UP-Harz (ungesättigtes Polyesterharz Ludepal P6 der BASF, 2 %ige Dispergierung) nach der DIN-Vorschrift bestimmten Grindometerwert von 50 bis 60.

Ist diese pyrogen hergestellte Kieselsäure zusätzlich höher verdichtet (100 bis 120 g/l), liegt auch der Grindometerwert deutlich höher, nämlich bei über 100, wodurch ein zusätzlicher nicht unerheblicher Aufwand als Verdickungs- und Thixotropierungsmittel erforderlich ist.

Es ist bekannt, eine hochdispergierte Kieselsäure mit einer Oberfläche von ca. 300 m$^2$/g in einer Stiftmühle zu vermahlen.

Der erreichte Grindometerwert beträgt anfangs bei der unverdichteten Kieselsäure 25.

Verdichtet man diese Kieselsäure auf 50 g/l, steigt der Grindometerwert auf 30 und bei einer weiteren Verdichtung auf 75 g/l sogar auf etwa 40 an.

Bei einer Lagerung über einen Zeitraum von drei Monaten weist die vermahlene, nicht modifizierte und auf 50 g/l verdichtete Kieselsäure einen Grindometerwert von 50 bis 60 auf.

Die Reagglomeration kann gemäß dem Stand der Technik nur verhindert werden, wenn man die hydrophile Kieselsäure mit 3 Gew.-% einer hydrophoben Kieselsäure vermischt und dieses Gemisch mittels einer Luftstrahlmühle oder einer Stiftmühle vermahlt (EP 0 076 377 B1).

Dabei wird bei einem pyrogen hergestellten Siliciumdioxid mit einer BET-Oberfläche von 200 $m^2$/g selbst nach einer Verdichtung auf 73 beziehungsweise 107 g/l ein Grindometerwert von 35 erreicht.

Bei einer pyrogen hergestellte Kieselsäure mit einer BET-Oberfläche von 300 $m^2$/g wird durch den Zusatz von hydrophober Kieselsäure vor dem Vermahlen der Grindometerwert auf 10 bei einem Stampfgewicht von 28,1 g/l und von 15 bis 20 bei einem Stampfgewicht von 50 g/l erreicht.

Die bekannten pyrogen hergestellten Kieselsäuren weisen den Nachteil auf, daß sie einen unerwünschten Anteil an hydrophiler Kieselsäure enthalten.

Gegenstand der Erfindung ist eine pyrogen hergestelltes silanisiertes Siliciumdioxid, welches dadurch gekennzeichnet ist, daß es die folgenden physikalisch-chemischen Kenndaten aufweist:

Grindometerwert kleiner 20 $\mu$m
Stampfdichte 25 bis 85 g/l

Ein weiterer Gegenstand der Erfindung ist ein Verfahren zur Herstellung des erfindungsgemäßen Siliciumdioxids, welches dadurch gekennzeichnet ist, daß man silanisierte, strukturmodifizierte pyrogen hergestellte Kieselsäuren, welche durch auf der Oberfläche fixierte Gruppen, wobei die Gruppen Dimethylsilyl und/oder Monomethylsilyl, bevorzugt Dimethylsilyl sind, gekennzeichnet sind, vermahlt.

In einer bevorzugten Ausführungsform der Erfindung können die eingesetzten Kieselsäuren die folgenden physikalisch-chemischen Kenndaten aufweisen:

| | |
|---|---|
| BET-Oberfläche $m^2$/g: | 25 - 400 |
| Mittlere Größe der Primärteilchen nm: | 5 - 50 |
| pH-Wert: | 3 - 10 |
| Kohlenstoffgehalt %: | 0,1 - 10 |

Pyrogene Kieselsäuren sind bekannt aus Winnacker-Küchler Chemische Technologie, Band 3 (1983) 4. Auflage, Seite 77 und

Ullmanns Enzyklopädie der technischen Chemie, 4. Auflage (1982), Band 21, Seite 462.

Insbesondere werden pyrogene Kieselsäuren durch Flammenhydrolyse von verdampfbaren Siliciumverbindungen, wie zum Beispiel $SiCl_4$ oder organischen Siliciumverbindungen, wie Trichlormethylsilan, hergestellt.

Die erfindungsgemäß eingesetzten silanisierten, pyrogen hergestellten Kieselsäuren können hergestellt werden, indem man pyrogen hergestellte Kieselsäure auf bekanntem Wege mit Dimethylchlorsilan und / oder Monomethyltrichlorsilan behandelt, wobei die Gruppen Dimethylsilyl und / oder Monomethylsilyl auf der Oberfläche der pyrogenen Kieselsäure fixiert werden.

In einer besonderen Ausführungsform der Erfindung kann man als Ausgangssiliciumdioxid ein mittels Dimethyldichlorsilan hydrophobiertes pyrogen hergestelltes Siliciumdioxid einsetzen.

Die Verwendung des silanisierten, pyrogen hergestellten Siliciumdioxids kann mittels einer Stiftmühle oder eine Luftstrahlmühle erfolgen.

Das erfindungsgemäße Siliciumdioxid neigt nicht zur Reagglomeration. Der Grindometerwert liegt unter 20.

Das erfindungsgemäße pyrogen hergestellte Siliciumdioxid kann als Füllstoff in Siliconkautschukmassen verwendet werden.

Siliconkautschukmassen sowie die Verwendung von pyrogen hergestelltem Siliciumdioxid (AEROSIL®) in Siliconkautschukmassen sind bekannt (Ullmann's Encyclopedia of Industrial Chemistry, Volume A 23, Rubber, 1, 221 ff.; Rubber 3, 3,6 ff.; Volume A 24, Silicones, 57 ff. 1993).

Pyrogen hergestelltes Siliciumdioxid wird aufgrund seiner ausgezeichneten Verdickungswirkung (Thixotropierung) in Silicondichtungsmassen eingesetzt, wobei diese Verdickungswirkung bei der Anwendung als Fugenmasse erwünscht ist.

Sollen jedoch die Siliconkautschukmassen als Beschichtungsmassen eingesetzt werden, ist eine niedrige Verdickung erwünscht (US 6.268.300).

Von entscheidender Bedeutung ist in beiden Fällen die optische Qualität der Oberfläche der Siliconvulkanisate.

Aufgabe der vorliegenden Erfindung ist es daher, Siliconkautschukmassen bereitzustellen, die durch den Einsatz von pyrogen hergestelltem Siliciumdioxid als Füllstoff nach der Vulkanisation eine optisch hochwertige Oberfläche zeigen.

Gegenstand der Erfindung sind Siliconkautschukmassen, enthaltend 0,5 bis 60 Gew.-%, bezogen auf die Gesamtmasse, des erfindungsgemäßen pyrogen hergestellten Siliciumdioxid mit den folgenden physikalisch-chemischen Kenndaten:

| | |
|---|---|
| Grindometerwert | kleiner 20 |
| Stampfdichte | 25 bis 85 g/l |

und

40 - 99,5 Gew.-%, bezogen auf die Gesamtmasse eines Organopolysiloxans der Formel

$$Zn\ Si\ R_{3-n}\ \text{-O-}[Si\ R_2\ O]_x\ \text{-}Si\ R_{3-n}\ \text{-}Z'_n$$

mit R = Alkyl, Alkoxy-, Aryl-, Oxim-, Acetoxy-,.

Alkylreste, mit 1 bis 50 Kohlenstoffatomen, unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 40 - 10.000 Repetiereinheiten.

Z = OH, Cl, Br, Acetoxy-, Amino-, Aminoxy-, Oxim-, Alkoxy-Amido-, Alkenyloxy-, Acryloxy-, oder Phosphatresten,

wobei die organischen Reste bis zu 20 Kohlenstoffatome tragen können, jeweils gleich oder verschieden.

Z'= Oxim-, Alcoxy-, Acetoxy-, Amino-, Amido-,
n = 1 - 3
X = 100 - 15.000

Als Organopolysiloxane können alle Polysiloxane verwendet werden, die bisher als Grundlage für bei Raumtemperatur vernetzenden (RTV) Massen verwendet wurden beziehungsweise verwendet werden konnten. Sie können zum Beispiel durch die allgemeine Formel

$$Zn\ Si\ R_{3-n}\ \text{-O-}[Si\ R_2\ O]_x\ \text{-}Si\ R_{3-n}\ \text{-}Z'_n$$

beschrieben werden, wobei X,R,Z' und Z folgenden Bedeutungen haben: mit R =Alkyl, Alkoxy-, Aryl-, Oxim-, Acetoxy-,. Alkylreste, mit 1 bis 50 Kohlenstoffatomen, unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 40 - 10.000 Repetiereinheiten.

Z = OH, Cl, Br, Acetoxy-, Amino-, Aminoxy-, Oxim-, Alkoxy-Amido-, Alkenyloxy, Acryloxy-, oder Phosphatresten, wobei die organischen Reste bis zu 20 Kohlenstoffatome tragen können, jeweils gleich oder verschieden.

Z'= Oxim-, Alcoxy-, Acetoxy-, Amino-, Amido-,
n = 1 - 3
X = 100 - 15.000

Innerhalb beziehungsweise entlang der Siloxankette in der oben angegebenen Formel können auch andere meist nur als Verunreinigungen vorliegende Siloxaneinheiten als Diorganosiloxaneinheiten, zum Beispiel solche der Formel $RSiO_{3/2}$ $R3O_{1/2}$ und $SiO_{4/2}$, wobei R jeweils die oben dafür angegebene Bedeutung hat, vorhanden sein. Die Menge dieser anderen Siloxaneinheiten sollte 10 Molprozent nicht übersteigen.

Beispiele für R mit der Bedeutung Alkylrest sind zum Beispiel Methyl-, Ethyl-, Propyl-, Hexyl-, und Octylreste; als Alkenylreste können Vinyl-, Allyl-, Ethylallyl- und Butadienylreste; und als Arylreste sind Phenyl- und Tolyrest einsetzbar.

Beispiele für substituierte Kohlenwasserstoffreste R sind insbesondere halogenierte Kohlenwasserstoffreste wie der 3,3,3-Trifluorpropylrest, Chlorphenyl- und Bromotolylrest; und Cyanalkylreste, wie der $\beta$-Cyanethylrest.

Beispiele für Polymere als Rest R sind über Kohlenstoff an Silicium gebundene Polystyrol-, Polyvinylacetat-, Polyacrylat-, Polymetacrylat- und Polyacrylnitrilreste.

Vorzugsweise besteht der überwiegende Teil der Reste R wegen der leichteren Zugänglichkeit aus Methylgruppen. Die übrigen Reste R sind insbesondere Vinyl- und/oder Phenylgruppen.

Insbesondere im Falle des Vorliegens von unter Ausschluß von Wasser lagerfähigen, bei Zutritt von Wasser bei Raumtemperatur zu Elastomeren härtenden Formulierungen handelt es sich bei Z und Z' um hydrolysierbare Gruppen. Beispiele für solche Gruppen sind Acetoxy-, Amino-, Aminoxy-, Alkenyloxy- (zum Beispiel $H_2C = (CH_3CO\text{-})$), Acyloxy- und Phosphatgruppen. Vor allem wegen der leichteren Zugänglichkeit sind als Z Acyloxygruppen, insbesondere Acetoxygruppen, bevorzugt. Es werden jedoch auch zum Beispiel mit Oximgruppen, wie solchen der Formel -ON=C (CH$_3$) (C$_2$H$_5$), als Z ausgezeichnete Ergebnisse erzielt. Beispiele für hydrolysierbare Atome Z sind Halogen- und Wasserstoffatome, Beispiele für Alkenylgruppen Z sind insbesondere Vinylgruppen.

Die Viskosität der im Rahmen der Erfindung verwendeten Organopolysiloxane sollte 500000 cP bei 25 °C, vorzugsweise 150000 cP bei 25 °C nicht übersteigen. Dementsprechend sollte der Wert x vorzugsweise 40000 nicht übersteigen.

Beispiele für verwendbare Organopolysiloxane sind zum Beispiel die Silikonpolymere E50 (α, ω-Hydroxydimethylsiloxypolydimethylsiloxan) oder M50 (α, ω-Hydroxydimethylsiloxypolydimethylsiloxan) der Fa. GE Bayer Silicones.

Es können auch Gemische aus verschiedenen Organopolysiloxanen verwendet werden.

Das Vermischen dieser Organopolysiloxane mit dem pyrogen hergestelltem Siliciumdioxid und gegebenenfalls den weiteren Bestandteilen der erfindungsgemäßen Formulierung kann in beliebig bekannter Weise, zum Beispiel in mechanischen Mischgeräten, erfolgen. Es vollzieht sich sehr rasch und leicht, gleichgültig in welcher Reihenfolge die Zugabe der Mischungsbestandteile durchgeführt wird.

Vorzugsweise werden die erfindungsgemäßen pyrogen hergestelltem Siliciumdioxid in Mengen von 0,5 bis 60 Gew.-%, vorzugsweise 3 % bis 30 Gew.-%, bezogen auf das Gesamtgewicht der zu Elastomeren härtbaren Massen, eingesetzt.

Liegen in den reaktionsfähigen endständigen Einheiten enthaltenden Diorganopolyxsiloxanen als einzige reaktionsfähige endständige Einheiten solche mit Sigebundenen Hydroxylgruppen vor, so müssen diese Diorganopolysiloxane vernetzt werden. Dies kann in an sich bekannter Weise durch das in der Luft enthaltene Wasser, gegebenenfalls unter Zugabe von weiterem Wasser mit einem Vernetzungsmittel erfolgen. Hier kann zum Beispiel der Silopren-Vernetzer 3034 von GE Bayer Silicones, der Ethyltriacetoxysilan optional in Gegenwart eines Kondensationskatalysators in bekannter Weise eingesetzt werden. Geeignete Katalysatoren für alle erfindungsgemäßen Formulierungen sind zum Beispiel die Silopren-Katalysatoren DBTA oder Typ 162 dibutylzinndiacetat oder -dilaurat des gleichen Herstellers.

In einer besonderen Variante der erfindungsgemäßen Siliconkautschukmassen können zusätzlich 0,5 - 20, bevorzugt 2 - 10 Gew.-%, bezogen auf das Gesamtgewicht der Masse, eines Vernetzers mit der Formel

$$R'_{4-t}Si\ Z'_4$$

Mit R' = Alkyl-, Alkoxy-, Acetoxy-, Oxim-, Aryl-, Alkenreste, mit 1 bis 50 Kohlenstoffatomen, unsubstituiert oder mit O, S,F,Cl,Br,I substituiert, jeweils gleich oder verschieden und/oder Polystyrol-, Polyvinylacetat-, Polyacrylat-, Polymethacrylat- und Polyacrylnitrilreste mit 5 - 5.000 Repetiereinheiten.

Z' = OH,Cl,Br,Acetoxy-, Oxim-, Amino-, Aminoxy-, Alkenyloxy- oder Phosphatresten, wobei die organischen Reste bis zu 20 Kohlenstoffatome tragen können, jeweils gleich oder verschieden.

```
t  = 3 oder 4 enthalten sein.
```

Alle Gewichtsangaben beziehen sich auf die Gesamtmenge an Siliconkautschukmassen.

Beispiele für Silane der oben angegebenen Formel sind Ethyltriacetoxysilan, Methyltriacetoxysilan, Isopropyltriacetoxysilan, Isopropoxytriacetoxysilan, Vinyltriacetoxysilan, Methyltrisdiethylaminooxysilan, Methyltris (-cyclohexylamino) -silan, Methyltris (-diethylphosphato) -silan und Methyltris (-methylethylketoximo) -silan

Selbstverständlich können erfindungsgemäße Formulierungen außer Organopolysiloxanen, hydrophobierte Kieselsäure, Vernetzungsmittel und Vernetzungskatalysatoren, gegebenenfalls herkömmlicherweise meist oder häufig in zu Elastomeren härtbaren Massen verwendete Füllstoffe, enthalten. Beispiele für solche Stoffe sind Füllstoffe mit einer Oberfläche unterhalb 50 m$^2$/g, wie Quarzmehl, Kaolin, Schichtsilikate, Tonmineralien, Diatomeenerde, ferner Zikoniumsilikat und Calciumcarbonat, ferner unbehandeltes pyrogen erzeugtes Siliciumdioxid, organische Harze, wie Polyvinylchloridpulver, Organopolysiloxanharze, faserige Füllstoffe, wie Asbest, Glasfasern und organische Pigmente, lösliche Farbstoffe, Duftstoffe, Korrosionsinhibitoren, die Härtung verzögernde Mittel, wie Benzotriazol und Weichmacher, wie durch Trimethylsiloxygruppen endgeblockte Dimethylpolysiloxane.

Optional können die erfindungsgemäßen RTV-1K-Siliconkautschukmassen 0,1 - 20, bevorzugt 0,1 - 15, besonders bevorzugt 0,1 - 10 Gew.-% (bezogen auf die Gedamtmenge der Formulierung) wasserbindende Stoffe enthalten. Geeignete Stoffe hierfür sind zum Beispiel Carbonsäureanhydride, zum Beispiel Essigsäureanhydrid oder Maleinsäureanhydrid, und/oder Kohlensäureester, wie zum Beispiel Diethylcarbonat, Ethylcarbonat und/oder Alkenyloxyverbindungen und/oder Ketale, wie zum Beispiel Dimethyldioxolan. Es ist möglich, ein oder mehrere dieser Stoffe einzusetzen.

Weiterhin können die Siliconkautschukmassen 0,01 bis 99,5 Gew.-% eines unfunktionalisierten Polysiloxans enthalten. Hier können die bereits genannten Polysiloxane eingesetzt werden, sofern sie nicht funktionalisiert sind. Ein geeignetes, unfunktionales Polysiloxan ist beispielsweise Baysilone-Öl M1000 (Polydiomethylsiloxan) der Fa. Ge Bayer Silicones.

Zusätzlich können die Siliconkautschukmassen 0,01 bis 6 Gew.-% organische oder anorganische Verbindungen der Metalle Pt,Sn,Ti und/oder Zn als Katalysator und/oder 0,01 bis 6 Gew.-% Inhibitoren und/oder 0,01 - 6 Gew.-% Funigizide und/oder Bakterizide und/oder 0,01 bis 6 Gew.-% Haftvermittler enthalten (wie zum Beispiel Silopren-Haftvermittler 3001 von GE Bayer Silicones, mit der Zusammensetzung: Ditert-butoxy-diacetoxy-Silan). Als Funigizide / Bakterizide können zum Beispiel Isothiazolinon, Vinycin oder Benzisothiazolinon eingesetzt werden.

Die erfindungsgemäßen Silikonkautschukmassen können als Silikonkautschuk-Systemen der Gruppe der raumtemperaturvernetzenden Einkomponenten-Silikonkautschukdichtungsmassen (1K-RTV) sowie selbstnivellierende raumtemperaturvernetzende Silikonkautschukmassen (1K-RTV) eingesetzt werden.

Die Silikonkautschukmassen können als Fugenmassen, Fensterdichtmassen, Dichtungen in Kraftfahrzeugen und Sport- und Haushaltsgeräten, hitzebeständigen Dichtungen, ölausschwitzenden und chemikalienbeständigen Dichtungen, sowie wasserdampfbeständigen Dichtungen, und Dichtungen in elektrischen und elektronischen Geräten eingesetzt werden.

Die Silikonkautschukmassen können als Beschichtungsmassen für Textilien, z. B. Spitzenbänder (Antislip), und textile Werkstoffe, z.B. Glasgewebe oder Nylongewebe, eingesetzt werden.

Die Vulkanisate der erfindungsgemäßen Silikonkautschukmassen weisen vorteilhafterweise eine hochwertige Oberfläche auf.

Zur Herstellung der erfindungsgemäßen Beispiele wurde handelsübliches AEROSIL® R 972 (Sackware) mit einer Dosierwaage in die eingesetzte Mühle dosiert und vermahlen. Die physikalisch-chemischen Kenndaten des AEROSIL®972 sind in der Tabelle 1 aufgeführt.

Die Parameter des Herstellungsverfahrens sind in der Tabelle 2 aufgeführt.

Für die Versuche wurde eine Stiftmühle (Alpine 160Z, Rotordurchmesser 160mm) oder eine Luftstrahlmühle (Mahlraumdurchmesser: 240 mm, Mahlraumhöhe: 35 mm) eingesetzt. Das vermahlene Produkt wurde mit einem Schlauchfilter (Filterfläche: 3,6 m$^2$, Filtermaterial: Nylongewebe) isoliert. In weiteren Versuchen wurde das erhaltene vermahlene Produkt mit einer handelsübliche Absackmaschine in handelsübliche Säcke gepackt. In weiteren Versuchen wurden die mit vermahlenem Produkt gepackten Säcke vor der Palettierung mit einer dafür geeigneten, technisch üblichen Methode egalisiert.

*Tabelle 1:*

| Eingesetzte pyrogen hergestellte Kieselsäure | | |
|---|---|---|
| | | AEROSIL® R 972 |
| Verhalten gegenüber Wasser | | hydrophob |
| Aussehen | | weißes Pulver |
| Oberfläche nach BET[1] | m$^2$/g | 90-130 |
| Mittlere Größe der Primärteilchen | nm | 16 |
| Stampfdichte [2] | g/l | ca.50 |
| Trocknungsverlust [3] (2 h bei 105 °C) bei Verlassen des Lieferwerkes | Gew.% | **<= 0,5** |
| Glühverlust [4][5] (2 h bei 1.000 °C) | Gew.% | **<= 2,0** |
| C-Gehalt | Gew.% | **0,6-1,2** |
| pH-Wert [6][7] | | **3,6-4,4** |
| SiO$_2$ -Gehalt[8] | Gew.% | **>= 99,8** |
| Al$_2$O$_3$ -Gehalt[8] | Gew.% | **<=0,050** |
| Fe$_2$O$_3$ -Gehalt [8] | Gew.% | **<=0,010** |
| TiO$_2$ -Gehalt[8] | Gew.% | **<=0,030** |

(fortgesetzt)

| Eingesetzte pyrogen hergestellte Kieselsäure | | |
|---|---|---|
| | | AEROSIL® R 972 |
| HCl -Gehalt[8)9)] | Gew.% | **<=0,050** |
| 1) Nach DIN ISO 9277<br>2) Nach DIN EN ISO 787-11, JIS K 5101/20 (ungesiebt)<br>3) Nach DIN EN ISO 787-2, ASTM D 280, JIS K 5101/23<br>4) Nach DIN EN 3262-20, ASTM D 1208, JIS K 5101/24<br>5) bezogen auf die 2 Stunden bei 105 °C getrocknete Substanz<br>6) Nach DIN EN ISO 787-9, ASTM D 1208, JIS K 5101/26<br>7) Wasser:Methanol = 1:1<br>8) bezogen auf die 2 Stunden bei 1.000 °C geglühte Substanz<br>9) HCl-Gehalt in Bestandteil des Glühverlustes | | |

*Tabelle 2:*

| Herstellung der erfindungsgemäßen Beispiele-Parameter | | | | | | | | |
|---|---|---|---|---|---|---|---|---|
| **Bezeichnung** | **Mühle \*** | **ML\*\*- Menge [m³]** | **ML\*\*- Druck [bar]** | **IL\*\*\*- Menge [m³]** | **IL\*\*\*- Druck [bar]** | **Dosierung [kg/h]** | **Absackung** | **Egalisierung** |
| Bsp. 1 | LS | 11,8 | 1,0 | 6,8 | 1,2 | 10 | Nein | Nein |
| Bsp. 2 | LS | 11,8 | 1,0 | 6,8 | 1,2 | 10 | Ja | Nein |
| Bsp. 3 | LS | 11,8 | 1,0 | 6,8 | 1,2 | 10 | Ja | Ja |
| Bsp. 4 | LS | 27,3 | 3,5 | 15,8 | 3,7 | 10 | Nein | Nein |
| Bsp. 5 | LS | 27,3 | 3,5 | 15,8 | 3,7 | 10 | Ja | Nein |
| Bsp. 6 | LS | 27,3 | 3,5 | 15,8 | 3,7 | 10 | Ja | Ja |
| Bsp. 7 | ST | - | - | - | - | 10 | Nein | Nein |
| Bsp. 8 | ST | - | - | - | - | 10 | Ja | Nein |
| Bsp. 9 | ST | - | - | - | - | 10 | Ja | Ja |
| Bsp. 10 | ST | - | - | - | - | 20 | Nein | Nein |
| Bsp. 11 | ST | - | - | - | - | 20 | Ja | Nein |
| Bsp. 12 | ST | - | - | - | - | 20 | Ja | Ja |
| \*LS=Luftstrahlmühle<br>ST=Stiftmühle<br>ML\*\*=Mahlluft<br>IL\*\*\*=Injektorluft | | | | | | | | |

*Tabelle 3:*

| Physikalisch-chemische Daten der erfindungsgemäßen Siliciumdixide und des Vergleichsbeispiels | | | | |
|---|---|---|---|---|
| **Bezeichnung** | **Spezifische Oberfläche nach BET [m²/g]** | **pH-Wert** | **Stampfdichte [g/l]** | **Grindometerwert[µm]** |
| Vergleichsbeispiel | 103 | 4,2 | 71 | 45 |
| Beispiel 1 | 102 | 4,2 | 27 | <20 |
| Beispiel 2 | 103 | 4,1 | 77 | <20 |
| Beispiel 3 | 104 | 4,0 | 81 | <20 |
| Beispiel 4 | 103 | 4,2 | 31 | <20 |
| Beispiel 5 | 104 | 4,2 | 58 | <20 |
| Beispiel 6 | 103 | 4,2 | 80 | <20 |
| Beispiel 7 | 103 | 4,2 | 31 | <20 |
| Beispiel 8 | 104 | 4,2 | 72 | <20 |
| Beispiel 9 | 105 | 4,2 | 71 | <20 |
| Beispiel 10 | 104 | 4,2 | 28 | <20 |
| Beispiel 11 | 104 | 4,2 | 75 | <20 |
| Beispiel 12 | 104 | 4,2 | 70 | <20 |

Die Daten der vermahlenen Produkte zeigen bei nahezu gleichbleibenden spezifischen Oberflächen und unveränderten pH-Werten niedrigere Grindometerwerte. Überaschenderweise bleiben die niedrigeren Grindometerwerte trotz der an der Stampfdichte erkennbaren Verdichtung durch Absackung beziehungsweise Absackung/Egalisierung erhalten.

Teilweise liegen die Stampfdichten sogar über der des eingesetzten Oxids, das heißt die erfindungsgemäßen Oxide besitzen trotz gleicher oder sogar höherer Verdichtung niedrigere Grindometerwerte.

*Tabelle 4:*

| Teilchengrößenbestimmung durch Auswertung von TEM-Aufnahmen | | | | |
|---|---|---|---|---|
| **Bezeichnung** | **DA [nm]** | **DV [nm]** | **D50(g) [nm]** | **Gesamtspanne [nm]** |
| Vergleichsbeispiel | 32,458 | 41,608 | 38,466 | 3,420-90,82 |
| Beispiel 1 | 23,532 | 26,673 | 25,746 | 3,420-45,740 |
| Beispiel 4 | 25,680 | 34,157 | 27,306 | 2,500-70,580 |
| Beispiel 7 | 29,670 | 39,071 | 34,679 | 4,340-82,540 |
| Beispiel 10 | 29,491 | 39,810 | 33,864 | 4,340-87,140 |
| DA: Teilchendurchmesser, über die Oberfläche gemittelt DV: Teilchendurchmesser, über das Volumen gemittelt D50(g): Medianwert Gewichtsverteilung | | | | |

Das erfindungsgemäße pyrogen hergestellte Siliciumdioxid kann D50 (g)(= Medianwert Gewichtsverteilung) von 25,7 bis 35,0 nm aufweisen.

Die Gesamtspanne der Teilchen kann 2.500 bis 87.140 nm betragen.

Der über die Oberfläche gemittelte Teilchendurchmesser DA kann 23,0 bis 30,9 nm betragen.

Der über das Volumen gemittelte Teilchendurchmesser DV kann 26,5 bis 40,0 nm betragen.

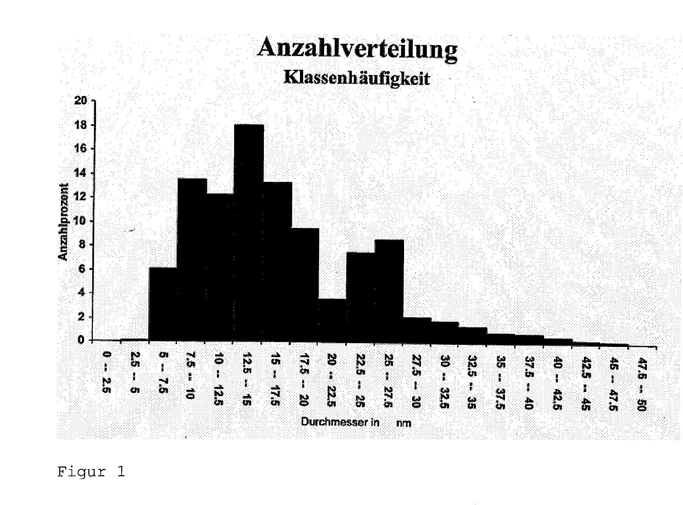

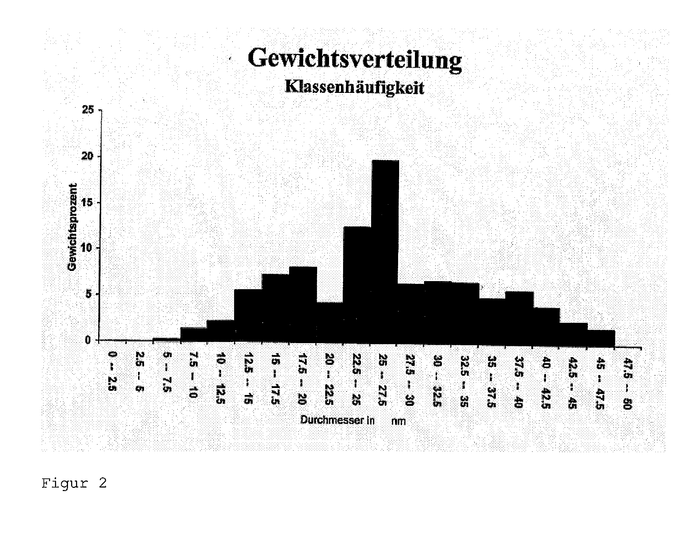

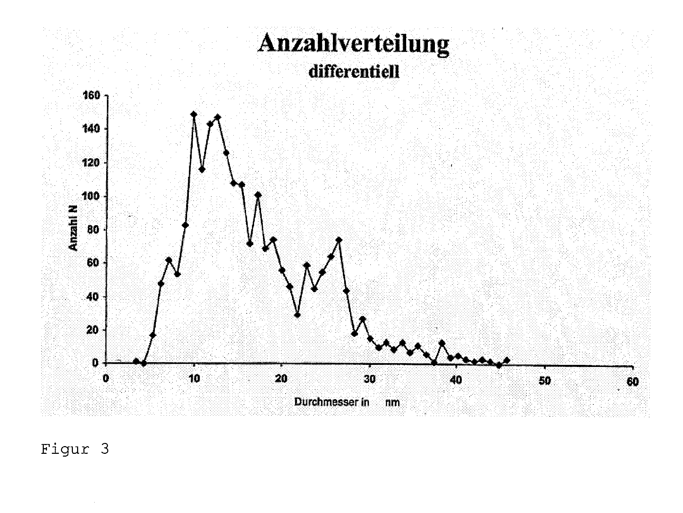

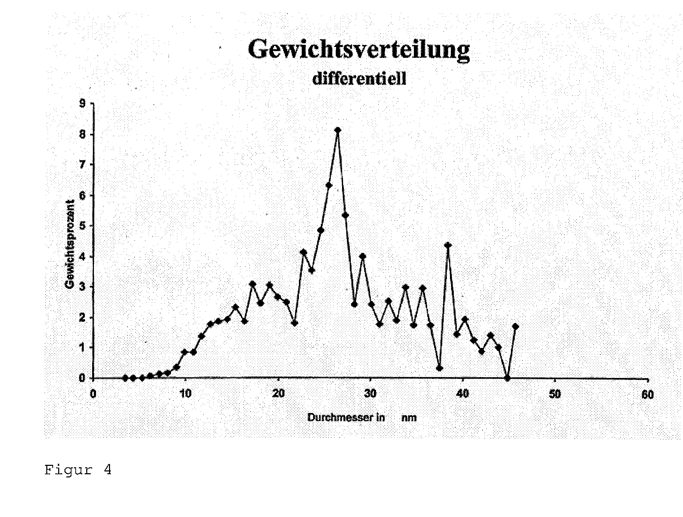

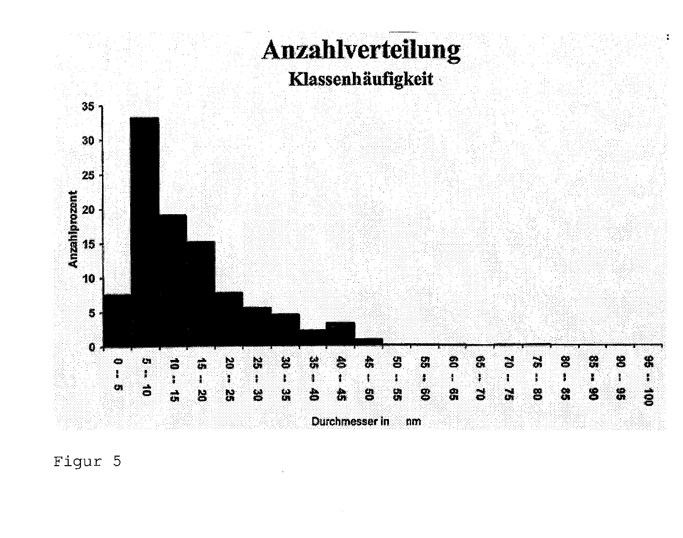

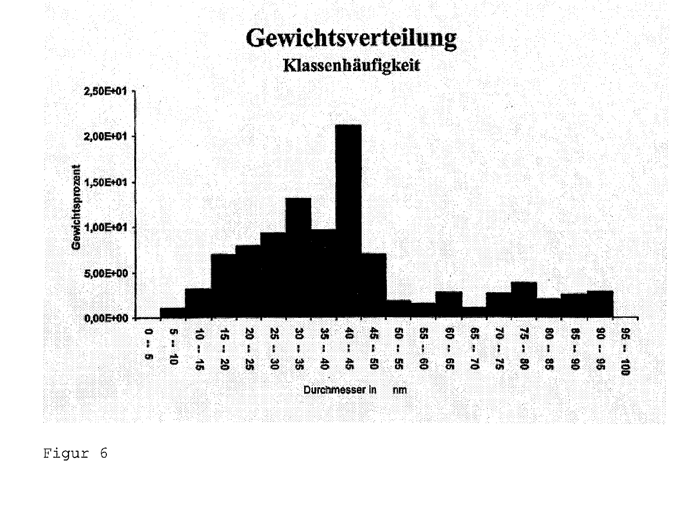

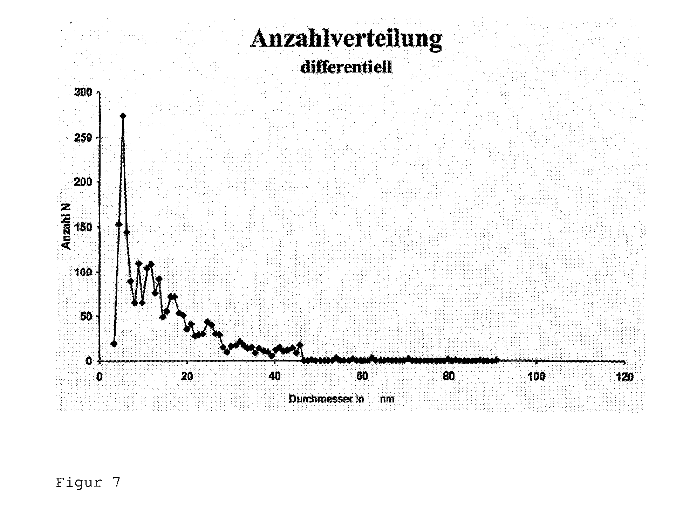

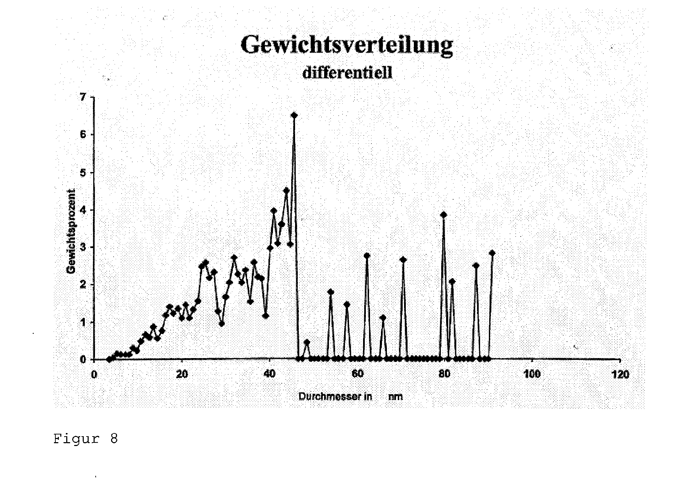

Die Figuren 1 bis 8 zeigen die graphische Darstellung der Verteilungen, gemessen an den Siliciumdioxiden gemäß Beispiel 1 (gemäß Erfindung) und gemäß dem Vergleichsbeispiel.

*Tabelle 5:*

| Teilchengrößenbestimmung durch Cilas | |
|---|---|
| **Bezeichnung** | **d 50-Wert [$\mu$m]** |
| Vergleichsbeispiel | 46,75 |
| Beispiel 1 | 6,95 |
| Beispiel 2 | 6,54 |
| Beispiel 3 | 6, 61 |
| Beispiel 4 | 4,57 |
| Beispiel 7 | 5,11 |
| Beispiel 9 | 6,34 |
| Beispiel 10 | 6,5 |
| Beispiel 11 | 6,36 |
| Beispiel 12 | 6,5 |

Das erfindungsgemäße Siliciumdioxid kann einen d50-Wert bestimmt duch Cilas von 4,5 bis 7,0 $\mu$m aufweisen.

**BET-Oberfläche**

Die BET-Oberfläche wird gemäß DIN ISO 9277bestimmt.

**Stampfdichte**

Die Bestimmung der Stampfdichte erfolgt nach DIN EN ISO 787-11.

Grundlagen der Stampfdichtebestimmung:

Die Stampfdichte (früher Stampfvolumen) ist gleich dem Quotienten aus der Masse und dem Volumen eines Pulvers nach dem Stampfen im Stampfvolumeter unter festgelegten Bedingungen. Nach DIN ISO 787/XI wird die Stampfdichte in g/cm$^3$ angegeben. Wegen der sehr niedrigen Stampfdichte der Oxide wird jedoch von uns der Wert in g/l angegeben. Ferner wird auf die Trocknung und Siebung sowie auf die Wiederholung des Stampfvorganges verzichtet.
Geräte zur Stampfdichtebestimmung:

Stampfvolumeter
Meßzylinder
Laborwaage (Ablesbarkeit 0.01 g)

Durchführung der Stampfdichtebestimmung:

200 $\pm$ 10 ml Oxid werden in den Meßzylinder des Stampfvolumeters so eingefüllt, daß keine Hohlräume verbleiben und die Oberfläche waagerecht ist.
Die Masse der eingefüllten Probe wird auf 0,01 g genau bestimmt. Der Meßzylinder mit der Probe wird in den Meßzylinderhalter des Stampfvolumeters eingesetzt und 1250 mal gestampft.
Das Volumen des gestampften Oxids wird auf 1 ml genau abgelesen.

Auswertung der Stampfdichtebestimmung:

$$\text{Stampfdichte (g/l)} = \frac{\text{g Einwaage x 1000}}{\text{ml abgelesenes Volumen}}$$

**pH-Wert**

Reagenzien zur pH-Wert-Bestimmung:

destilliertes oder vollentsalztes Wasser, pH > 5.5 Methanol, p.a.
Pufferlösungen pH 7.00 pH 4.66

Geräte zur pH-Wert-Bestimmung:

Laborwaage, (Ablesbarkeit 0,1 g)
Becherglas, 250 ml
Magnetrührer
Magnetstab, Länge 4 cm
kombinierte pH-Elektrode
pH-Meßgerät
Dispensette, 100 ml

Arbeitsvorschrift zur Bestimmung des pH-Wertes:

Die Bestimmung erfolgt in Anlehnung an DIN EN ISO 787-9. Kalibrierung: Vor der pH-Wertmessung wird das Meßgerät mit den Pufferlösungen geeicht. Werden mehrere Messungen hintereinander durchgeführt, genügt eine einmalige Kalibrierung.
4 g Oxid werden in einem 250 ml Becherglas mit 48 g (61ml) Methanol angeteigt und die Suspension mit 48 g (48ml) Wasser verdünnt und fünf Minuten bei eingetauchter pH-Elektrode mit einem Magnetrührer gerührt (Drehzahl ca. 1000 min-1) .
Nach Abstellen des Rührers wird der pH-Wert nach einer Standzeit von einer Minute abgelesen. Das Ergebnis wird mit einer Dezimale ausgewiesen.

**Grindometerwert**

Grundlagen:

Der Grad der Dispergierung bestimmt die anwendungstechnischen Eigenschaften der mit Aerosil verdickten Flüssigkeit. Die Messung des Grindometerwertes dient zur Beurteilung des Dispergiergrades. Unter dem Grindometerwert versteht man die Grenzschichtdicke, unterhalb derer die vorliegenden Stippen beziehungsweise Aggregate auf der Oberfläche der ausgestrichenen Probe sichtbar werden.
Die Probe wird mit einem Schaber in einer Rinne ausgestrichen, deren Tiefe an einem Ende doppelt so groß ist, wie der Durchmesser der größten Aerosil-Körner und zum anderen Ende stetig bis 0 abnimmt. Auf einer die Tiefe der Rinne angegebenen Skala wird derjenige Wert für die Tiefe in Mikrometer abgelesen, unterhalb dessen eine größere Anzahl von Aerosil-Körnern durch Stippen oder Kratzer auf der Oberfläche des Bindemittelsystems sichtbar werden. Der abgelesene Wert ist der Grindometerwert des vorliegenden Systems.

Geräte und Reagenzien:

Grindometer nach Hegmann mit einem Tiefenbereich von 100-0 Mikrometer.
Dispersion Polyesterharz mit 2 % Aerosil, hergestellt nach Prüfanweisung 0380.

Durchführung:

Der Grindometerblock wird auf eine ebene, rutschsichere Fläche gelegt und unmittelbar vor der Prüfung sauber abgewischt. Dann wird die Aerosil-Dispersion, die frei von Luftblasen sein muß, an der tiefsten Stelle der Rinne so aufgebracht, daß sie etwas über den Rand der Rinne hinwegfließt. Der Schaber wird nun mit beiden Händen gefaßt und senkrecht zum Grindometerblock und im rechten Winkel zu seinen Längskanten mit leichtem Druck auf das Ende der Rinne aufgesetzt, in dem sich die Dispersion befindet. Dann wird die Dispersion durch langsames, gleichmäßiges Ziehen des Schabers über den Block in der Rinne ausgestrichen. Spätestens 3 Sekunden nach dem Ausstreichen der Dispersion wird der Grindometerwert abgelesen.

Dabei wird die Oberfläche der ausgestrichenen Dispersion (quer zur Rinne) schräg von oben unter einem Winkel von 20-30° (zur Fläche) betrachtet. Der Block wird so zum Licht gehalten, daß die Oberflächenstruktur der ausgestrichenen Dispersion gut zu erkennen ist.

Auf der Skala wird als Grindometerwert der Wert in Mikrometer abgelesen, unterhalb dessen eine größere Anzahl von Aerosil-Körnern als Stippen oder Kratzer auf der Oberfläche sichtbar werden. Einzelne, zufällig auftretende Stippen oder Kratzer werden dabei nicht berücksichtigt.

Die Körnigkeit wird mindestens zweimal beurteilt, und zwar jeweils an einer neu ausgestrichenen Dispersion.

Auswertung:

Aus den Meßwerten wird der arithmetische Mittelwert gebildet.

Zwischen dem Grindometerwert in Mikrometer und den auf dem Zollsystem basierenden Hegmann-Einheiten und FSPT-Einheiten besteht folgender Zusammenhang:

$$B = 8 - 0{,}079\, A$$
$$C = 10 - 0{,}098\, A = 1{,}25\, B$$

Hierin bedeuten:

A = Grindometerwert in Mikrometer
B = Grindometerwert in Hegmann-Einheiten
C = Grindometerwert in FSPT-Einheiten

*II. Herstellung der Silikonkautschukmassen*

1. Allgemeine Versuchsdurchführung

a) Grundlagen
Um die anwendungstechnischen Eigenschaften von AEROSIL® in RTV1-Silicondichtungsmassen zu prüfen, werden nach einer Standard-Formulierung entsprechende Siliconmassen im Labormaßstab hergestellt.

b) Geräte
Der Planeten-Dissolver muß folgenden Anforderungen entsprechen:

Das Rührgefäß faßt ca. 2 Liter und ist mit einem Doppelmantel mit Kühlwasseranschluß versehen.
Planetenantrieb und Dissolverantrieb sind unabhängig.
Eine Vakuumpumpe muß vorhanden sein. Eine zusätzliche Faßpresse erleichtert das Abfüllen. Die Demontage zur Reinigung sollte schnell gehen.
c) Formulierung
62,4 % Siliconpolymer
Silopren E 50 (GE Bayer Silicones)
24,6 % Siliconöl
Siliconöl M 1000 (GE Bayer Silicones)
4,0 % Acetat-Vernetzer
Vernetzer AC 3034 (GE Bayer Silicones)
1,0 % Haftvermittler
Haftvermittler AC 3001 (GE Bayer Silicones)
0,01 % Katalysator Dibutylzinndiacetat

8,0 % pyrogene Kieselsäure
AEROSIL® (Degussa AG)
d) Durchführung
468,0 g Siliconpolymer, 184,5 g Siliconöl,
30,0 g Vernetzer, 7,5 g Haftvermittler werden in das Rührgefäß eingewogen und 1 Minute bei einer Geschwindigkeit von 50 U min$^{-1}$ des Planetenantriebs und 500 U min$^{-1}$ des Dissolvers homogenisiert.
Danach werden 60 g Kieselsäure bei der gleichen Geschwindigkeit in 2 Etappen (je ca. 30 g) eingearbeitet und die Zeit, die zur Benetzung nötig ist, ermittelt.

Sobald die Kieselsäure vollständig benetzt ist, wird ein Vakuum von ca. 200 mbar angelegt und 5 Minuten bei 100 U min$^{-1}$ des Planetenrührwerks und 2000 U min$^{-1}$ Dissolverantrieb dispergiert.
Mit einer Faßpresse wird die Dichtungsmasse in zwei Aluminium-Tuben abgefüllt.
Die so erhaltene Siliconkautschukmasse wird mit einem Rakel ausgestrichen und bei Raumtemperatur in Raumluft innerhalb von 24h vulkanisiert. Die Oberfläche der Vulkanisate wird optisch begutachtet und nach einem Schulnotensystem bewertet:
Noten: 1=sehr gut, 2=gut, 3=befriedigend, 4= Unbefriedigend, 5= Mangelhaft
Bei der Verwendung der Kieselsäuren aus den Beispielen 1, 3, 4, 6, 7 und 9 werden überraschenderweise im Vergleich zu Standardmaterial gute Oberflächeneigenschaften der Siliconvulkanisate erhalten, obwohl diese Kieselsäuren zum Teil sehr hohe Stampfdichten aufweisen, was normalerweise zu einer schlechten Oberflächenbeschaffenheit führen würde. Das Siliconvulkanisat mit dem Standardmaterial zeigt nur eine befriedigende Oberfläche.

*Tabelle 6: Eigenschaften der unvernetzten Dichtungsmassen*

| Bsp. | Produkt Siliciumdioxid gemäß | Vermahlung Absackung | Fließgrenze [Pa] | Viskosität D=10 s-1 [Pa*s] | Dispergierung [Noten] | Oberfläche [Noten] |
|---|---|---|---|---|---|---|
| Bsp. 13 | Vgl.-Bsp. | Referenz | 176 | 85 | 1,5 | 3 |
| Bsp.14 | Beispiel 1 | LS Nein | 184 | 86 | 1,5 | 2 |
| Bsp.15 | Beispiel 3 | LS Carter | 173 | 87 | 1,5 | 2 |
| Bsp.16 | Beispiel 4 | LS Nein | 180 | 88 | 1,5 | 2 |
| Bsp.17 | Beispiel 6 | LS Carter | 165 | 84 | 1,5 | 2 |
| Bsp.18 | Beispiel 7 | ST Nein | 163 | 83 | 1,5 | 2 |
| Bsp.19 | Beispiel 9 | ST Carter | 172 | 86 | 1,5 | 2 |
| Noten: 1 = Sehr gut, 2 = Gut, 3 = Befriedigend, 4 = Unbefriedigend, 5 = Mangelhaft | | | | | | |

**Patentansprüche**

1. Pyrogen hergestelltes silanisiertes Siliciumdioxid mit den folgenden physikalisch-chemischen Kenndaten:

Grindometerwert    kleiner 20 μm
Stampfdichte    25 bis 85 g/l

2. Verfahren zur Herstellung des pyrogen hergestellten silanisierten Siliciumdioxids gemäß Anspruch 1, **dadurch gekennzeichnet, daß** man ein pyrogen hergestelltes Siliciumdioxid mit einer BET-Oberfläche von 130± m$^2$/g silanisiert und anschließend vermahlt.

3. Verwendung des pyrogen hergestellten silanisierten Siliciumdioxid gemäß Anspruch 1 als Füllstoff in Siliconkautschuk.

**4.** Siliconkautschukmassen, enthaltend 0,5 bis 60 Gew.-% des pyrogen hergestellten silanisierten Siliciumdioxids mit den physikalisch-chemischen Kenndaten:

| Grindometerwert | kleiner 20 $\mu$m |
|---|---|
| Stampfdichte | 25 bis 85 g/l |

und 40 bis 99,5 Gew.-% eines Organopolysiloxans der Formel und 40 - 99,5 Gew.-% eines Organopolysiloxans der Formel $Z_n$ Si $R_{3-n}$ -O-[Si $R_2$ O]x -Si $R_{3-n}$ -Z'n mit R = Alkyl, Alkoxy-, Aryl-, Oxim-, Acetoxy-, Alkylreste, mit 1 bis 50 Kohlenstoffatomen, unsubstituiert oder mit O, S, F, Cl, Br, I substituiert, jeweils gleich oder verschieden und/ oder Polystyrol-, Polyvinylacetat-, Polyacrylat-, Polymethacrylat- und Polyacrylnitrilreste mit 40 - 10.000 Repetiereinheiten,

Z = OH, Cl, Br, Acetoxy-, Amino-, Aminoxy-, Oxim-, Alkoxy-Amido-, Alkenyloxy-, Acryloxy-, oder Phosphatresten, wobei die organischen Reste bis zu 20 Kohlenstoffatome tragen können, jeweils gleich oder verschieden,

Z'= Oxim-, Alcoxy-, Acetoxy-, Amino-, Amido-,
n = 1 - 3
X = 100 - 15.000

Anzahlverteilung
Klassenhäufigkeit

Figur 1

Figur 2

Figur 3

**Gewichtsverteilung**
differentiell

Figur 4

Figur 5

**Gewichtsverteilung**
Klassenhäufigkeit

Figur 6

Figur 7

**Gewichtsverteilung**
differentiell

Figur 8

**Europäisches Patentamt**

**EUROPÄISCHER RECHERCHENBERICHT**

Nummer der Anmeldung

EP 05 11 2922

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/241531 A1 (MEYER JURGEN ET AL) 3. November 2005 (2005-11-03) | 1-3 | C09C1/30 C01B33/18 C08K3/36 |
| Y | * Absätze [0002], [0005], [0008], [0021], [0022]; Beispiele Comparative,silica,1; Tabellen 6,7 * | 4 | |
| | ----- | | |
| X | US 2002/077407 A1 (MEYER JURGEN ET AL) 20. Juni 2002 (2002-06-20) | 1,3 | |
| A | * Ansprüche 1,2,4; Beispiel 1 * | 2,4 | |
| | ----- | | |
| Y | US 2002/168524 A1 (KERNER DIETER ET AL) 14. November 2002 (2002-11-14) | 4 | |
| A | * Absatz [0141]; Beispiel 1 * | 1-3 | |
| | ----- | | |

**RECHERCHIERTE SACHGEBIETE (IPC)**

C09C
C01B
C08K

Der vorliegende Recherchenbericht wurde für alle Patentansprüche erstellt

| Recherchenort | Abschlußdatum der Recherche | Prüfer |
|---|---|---|
| München | 5. April 2006 | Werner, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 11 2922

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-04-2006

| Im Recherchenbericht angeführtes Patentdokument | Datum der Veröffentlichung | Mitglied(er) der Patentfamilie | Datum der Veröffentlichung |
|---|---|---|---|
| US 2005241531 A1 | 03-11-2005 | AU 2003255310 A1<br>BR 0313967 A<br>CA 2496914 A1<br>CN 1678695 A<br>DE 10239424 A1<br>WO 2004020531 A1<br>EP 1530613 A1<br>JP 2005536611 T | 19-03-2004<br>19-07-2005<br>11-03-2004<br>05-10-2005<br>11-03-2004<br>11-03-2004<br>18-05-2005<br>02-12-2005 |
| US 2002077407 A1 | 20-06-2002 | CA 2359493 A1<br>EP 1199335 A1<br>JP 2002194246 A | 21-04-2002<br>24-04-2002<br>10-07-2002 |
| US 2002168524 A1 | 14-11-2002 | DE 10109484 A1<br>EP 1236773 A2<br>JP 2002321909 A | 12-09-2002<br>04-09-2002<br>08-11-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040110077 A1
- EP 0076377 B1
- US 6268300 B

**In der Beschreibung aufgeführte Nicht-Patentliteratur**

- Ullmanns Enzyklopädie der technischen Chemie. 1982, vol. 21, 464
- Ullmann's Enzyklopädie der technischen Chemie. vol. 1, 616, 638
- Winnacker-Küchler Chemische Technologie. 1983, vol. 3, 77
- Ullmanns Enzyklopädie der technischen Chemie. 1982, vol. 21, 462
- Ullmann's Encyclopedia of Industrial Chemistry. vol. A 23, 221
- ULLMANN'S ENCYCLOPEDIA OF INDUSTRIAL CHEMISTRY. 3, 6
- ULLMANN'S ENCYCLOPEDIA OF INDUSTRIAL CHEMISTRY. 1993, vol. A 24, 57